Europäisches Patentamt

European Patent Office

Office européen des brevets

(19)

(11) Veröffentlichungsnummer: **0 193 734**
A2

# (12) EUROPÄISCHE PATENTANMELDUNG

(21) Anmeldenummer: **86101206.0**

(22) Anmeldetag: **30.01.86**

(51) Int. Cl.⁴: **F 25 D 23/10**, F 25 D 23/06, B 60 P 3/36

(30) Priorität: **25.02.85 DE 8505245 U**

(43) Veröffentlichungstag der Anmeldung: **10.09.86** Patentblatt 86/37

(84) Benannte Vertragsstaaten: **BE FR IT NL SE**

(71) Anmelder: **ELECTROLUX SIEGEN GMBH, Welterstrasse 55-57, D-5900 Siegen 1 (DE)**

(72) Erfinder: **Giesler, Rolf-Dieter, Stephenstrasse 7, D-5910 Kreuztal (DE)**

(74) Vertreter: **Patentanwälte Beetz sen. - Beetz jun. Timpe - Siegfried - Schmitt-Fumian, Steinsdorfstrasse 10, D-8000 München 22 (DE)**

(54) **Kühlschrank für Wohnwagen.**

(57) Gegenstand der Erfindung ist ein Kühlschrank für Wohnwagen, insbesondere zum Einbau auf einem Fahrzeug-Radkasten und in Eckbereichen, dessen Gehäuse (2) im hinteren unteren Teil einen den Radkasten aufnehmenden Ausschnitt (4) aufweist. Zum Erhalt eines möglichst großen Rauminhalts und zum bequemen Öffnen der Kühlschranktür ist zumindest eine Innenfläche der isolierten Seitenwände (20, 21) im Bereich der Türöffnung wulstartig nach innen eingezogen und bildet einen verbreiterten Stoß (22, 23). Zweckmäßig stehen die die Türöffnung begrenzenden Stöße (22, 23) seitlich über die Türkanten vor, wobei die Breite mindestens eines dieser vorstehenden Stoßabschnitte (24) der Gesamtdicke der mit einer zusätzlichen Verblendung versehenen Kühlschranktür (15, 27) entspricht.

0193734

ELECTROLUX SIEGEN GMBH
D-59oo Siegen 1
------------------------

Kühlschrank für Wohnwagen

Die Erfindung betrifft einen Kühlschrank für Wohnwagen,insbesondere zum Einbau in Eckbereichen auf den
Fahrzeug-Radkästen, deren Gehäuse im hinteren unteren
Teil einen den Radkasten aufnehmenden Ausschnitt aufweist.

Aus der DE-PS 1 755 129 ist bereits ein derartiger
Kühlschrank für Wohnwagen und Wohnmobile bekannt, der
auf dem Fahrzeug-Radkasten angeordnet wird und zu diesem Zweck an seiner Rückseite einen entsprechend großen
Ausschnitt im Gehäuse aufweist. Diese Anordnung des relativ schweren Kühlschranks auf einem der Radkästen hat
den Vorteil einer gegenüber quaderförmigen Kühlschränken verbesserten Raumausnutzung und einer für das Fahrverhalten besonders günstigen Gewichtsverteilung. Nachteilig bei diesem bekannten Kühlschrank ist jedoch sein
relativ geringer Rauminhalt. Da ferner die Türbreite
der Breite des Schrankgehäuses entspricht, kann die

- 2 -

0193734

Tür bei einer Positionierung des Kühlschranks in einer Ecke nicht bis in eine 90°-Stellung geöffnet werden, weil sie mit ihrer Verblendung an dem rechtwinklig zum Kühlschrank aufgestellten Einbau-Möbelteil anschlägt. Darüber hinaus erfordert die relativ große Türbreite auch einen entsprechend großen Aufschwenk-Raum vor dem Kühlschrank, der insbesondere bei kleineren Wohnwagen-Typen nur schwierig konstruktiv zur Verfügung gestellt werden kann und die Bewegungsfreiheit der Insassen beeinträchtigt.

Grundsätzlich werden Kühlschränke von entsprechenden Fachfirmen in standardisierten bzw. genormten Größen hergestellt und gelangen in dieser Form in den Handel oder werden an die Hersteller von Einbauküchen geliefert. Um einen einheitlichen und ansprechenden Gesamteindruck einer Einbauküche zu erhalten, werden die sichtbaren Bauelemente der Kühlschränke, d. h. zumindest die Türen, mit einem Paneel in Form einer entsprechend eingefärbten und/oder beschichteten Frontplatte verblendet. Durch dieses Paneel vergrößert sich die Gesamt-Dicke der Tür um zumindestens die Wandstärke des Paneels. Bei einer Anordnung eines derartigen Kühlschranks in einer Ecke einer Einbauküche ergeben sich Probleme beim Öffnen der Tür, weil sich ihr Aufschwenkbereich durch die vergrößerte Gesamtdicke entsprechend verringert hat. Diese für Kühlschränke allgemein gültigen Kriterien sind gerade bei Kühlschränken für Einbauküchen von Wohnwagen wegen der außerordentlich beengten Verhältnisse von besonderer Bedeutung.

Aufgabe der Erfindung ist es, einen Kühlschrank für Wohnwagen, Wohnmobile od. dgl. zu schaffen, der unter Berücksichtigung der beengten Verhältnisse im Wohnwageninneren einen vergrößerten Rauminhalt besitzt und dessen Tür sich bei einer Eckanordnung des Kühlschranks um mindestens 90° ohne Beschädigungen bzw. Kollisionen mit anderen Einbauteilen öffnen läßt.

Diese Aufgabe wird erfindungsgemäß dadurch gelöst, daß die Innenflächen der Seitenwände im Bereich der Türöffnung wulstartig nach innen eingezogen sind und wobei die an einem Stoß angelenkte und ggf. mit einer Verkleidung versehene Tür so gewählt werden kann, daß seitliche Bereiche der Stöße über die Enden der geschlossenen Tür vorstehen.

Die erfindungsgemäße Ausgestaltung eines Wohnwagen-Kühlschranks eröffnet die Möglichkeit, den Kühlschrank innerhalb eines Einbau-Systems in einer Ecke zu positionieren, wobei die sich unmittelbar im Eck befindliche Scharnierkante der mit einer Verkleidung versehenen Tür so am verbreiterten Stoß der Seitenwand positioniert ist, daß sich die Tür in einem Schwenkbereich von 90° ohne Kollision der Verkleidung an einem über Eck angrenzenden Küchenmöbel öffnen läßt. Darüber hinaus kann der Kühlschrank so eingebaut werden, daß ein Teil der Seitenwand bzw. seines Innenraumes in die von dem sich senkrecht anschließenden Einbauteil gebildete Ecke hineinragt, wodurch sich eine verbesserte Ausnutzung des beengten zur Verfügung stehenden Raumes und ein um bis zu ca. 10 l vergrößerter Rauminhalt des Kühlschrankes erreichen läßt. Eine gegenüber herkömmlichen Standardgeräten möglicherweise schmalere Tür benötigt einen entsprechend geringeren Aufschwenkbereich, so
daß auch bei geöffneter Schranktür ein vergrößerter
Bewegungsraum verbleibt.

Die seitlich über die Längskanten der geschlossenen Tür vorstehenden Seitenwände ermöglichen das Einschieben des Kühlschranks in Eckbereiche von Wohnwagen-Einbaukombinationen bei in einem Schwenkbereich
von 90° zu öffnender Tür. Die seitlich vorstehenden
Seitenwandstege können so verblendet werden, daß eine
der somit reduzierten Türbreite äquivalente Einbauküchenkombination verwendet werden kann. Durch die erfindungsgemäße Kühlschrankausbildung können einfach
Türscharniere statt der bei Großkühlschränken z. T.
verwendeten Schwenkhebel- oder Doppelgelenk-Scharniere eingesetzt werden. Dies hat neben einem geringeren
Preis noch den Vorteil einer zuverlässigeren Funktionsfähigkeit auch unter den bei Wohnwagen während der
Fahrt auftretenden Stoßbelastungen.

Im folgenden wird ein Ausführungsbeispiel der
Erfindung anhand der Zeichnung im einzelnen beschrieben. Es zeigen:

Fig. 1          einen Wohnwagen-Kühlschrank mit
                verkleideter Tür im vertikalen
                Längsschnitt;

Fig. 2          den Kühlschrank nach Fig. 1
                im Querschnitt;

Fig. 3          eine Stirnansicht des Kühlschranks
                nach Fig. 1 ohne Tür.

- 5 -

Der dargestellte Kühlschrank besteht aus einem wärmeisolierten Gehäuse 1, an dessen ebener Rückwand 2 im oberen Bereich ein Kälteaggregat 3 befestigt ist. Im unteren rückwärtigen Teil des Gehäuses 1 ist ein Ausschnitt 4 ausgebildet, der die Positionierung des Kühlschranks auf einem Radkasten eines Wohnwagens ermöglicht. Im Kühlschrankinneren befindet sich eine durch eine Tür 5 verschließbare Kühlbox 6, die in einem oberen Eckbereich des Kühlschranks als gesonderte isolierte Baueinheit angeordnet ist. Unterhalb der Kühlbox 6 sind im Innenraum des Kühlschrankes mehrere horizontale Etageren 7, 8 herausnehmbar in den Seitenwänden befestigt. Die untere Etagere 8 befindet sich in gleicher Höhe wie die Innenfläche einer vom Gehäuseausschnitt 4 gebildeten inneren Stufe 26, so daß auch in diesem Niveau eine ausreichend große Ablagefläche zur Verfügung steht. Oberhalb der oberen Etagere 7 ist die Rückwand 2 des Gehäuses 1 nach innen zu einem Ansatz 9 eingezogen und weist darüber eine abgesetzte Ausnehmung 10 auf, in welcher ein entsprechend geformter Baukörper 11 abgedichtet eingesetzt ist, welcher an seiner Stirnseite einen Kälteerzeuger 12 trägt. Auf der ebenen Oberseite des Gehäuses 1 ist ein Schaltkasten 13 mit frontseitig betätigbaren Stellknöpfen befestigt.

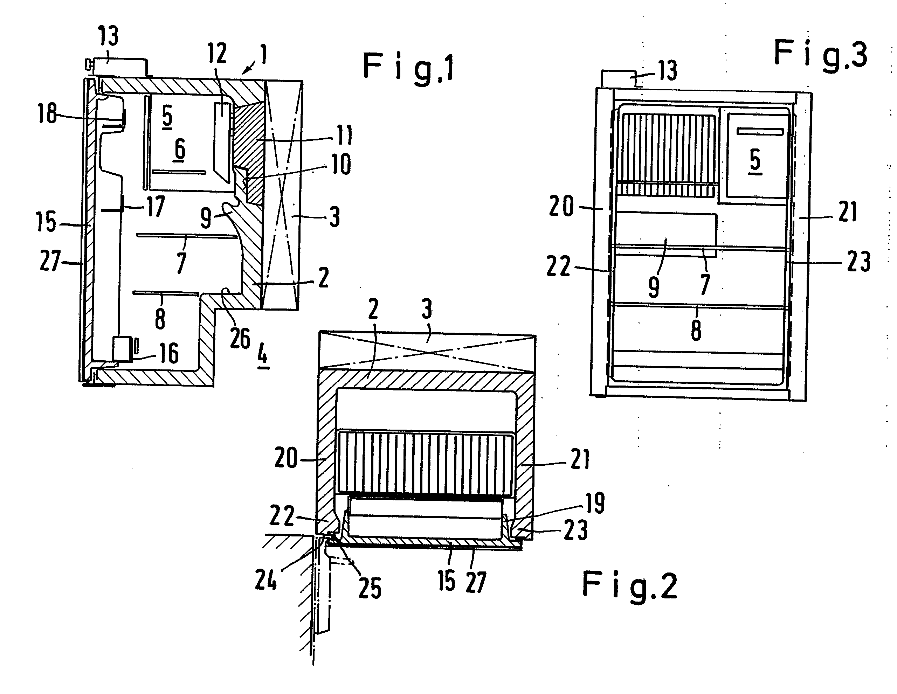

Die Frontseite des Kühlschranks wird durch eine Tür 15 verschlossen, die in Fig. 1, 2 im Längs- und im Querschnitt dargestellt ist. An der Innenseite dieser Isolier-Tür 15 sind Etageren 16, 17, 18 vorgesehen, die seitlich durch vertikale Streben 19 gehalten sind, welche an der Tür 15 einstückig angeformt sind. Wie aus den Fig. 2, 3 ersichtlich, sind die beiden ebenen Seitenwände 20, 21 des Gehäuses 1 in ihrem vorderen Endabschnitt 22, 23 wulstartig verdickt nach innen eingezogen und bilden auf diese Weise entsprechend verbreiterte Stöße, die seitlich über die beiden Kanten der Tür 15 hinausstehen.

Der dargestellte Kühlschrank ist Teil einer Einbauküche. Aus diesem Grunde ist außen an der isolierten Schranktür 15 vom Küchen- bzw. Wohnwagen-Hersteller eine Verkleidung in Form einer dem Küchendesign entsprechenden Platte 27 angeordnet, durch die sich die Gesamtdicke der Schranktür 15 entsprechend vergrößert. Um eine Aufschwenkbewegung dieser verkleideten Tür 15, 27 um 90° auch bei einer in Fig. 2 dargestellten Eckanordnung des Kühlschranks aus der in durchgezogen dargestellten geschlossenen Stellung in die strichpunktiert dargestellte Öffnungsstellung zuzulassen, hat der vorstehende Bereich 24 zumindest des die Türscharniere 25 tragenden Stoßes eine der Gesamtdicke der Tür 15, 27 etwa entsprechende Breite. Bei Verwendung von in herkömmlicher Weise standardisierten Türen 15 mit festgelegter Breite kann die Breite des Kühlschranks selbst vergrößert werden, was einen um bis zu 10 l vergrößerten nutzbaren Innenraum ergibt und bei den außerordentlich beengten Verhältnissen von Wohnwagen einen erheblichen Vorzug bedeutet. Bei der Eckanordnung des Kühlschrankes kann die Tür 15 bis in ihre 90°-Stellung aufgeschwenkt werden (vgl. die strichpunktierte Darstellung in Fig. 2), ohne daß die sich über Eck anschließenden Einbauteile oder das
Paneel der Tür durch Kollisionen beschädigt werden.
Zur Verbesserung des optischen Gesamteindruckes
können auch die verbreiterten Stoßflächen mit einer
geeigneten Verkleidung versehen werden.

A n s p r ü c h e
------------------------

1. Kühlschrank für Wohnwagen, insbesondere zum Einbau auf
   einem Fahrzeug-Radkasten und in Eckbereichen, dessen
   Gehäuse im hinteren unteren Teil einen den Radkasten
   aufnehmenden Ausschnitt aufweist,

   d a d u r c h    g e k e n n z e i c h n e t ,

   daß zumindest eine Innenfläche der isolierten Seitenwände (20, 21) im Bereich der Türöffnung wulstartig
   nach innen eingezogen ist und einen verbreiterten Stoß
   (22, 23) bildet.

2. Kühlschrank nach Anspruch 1,
   dadurch gekennzeichnet,
   daß die die Türöffnung begrenzenden Stöße (22, 23) seitlich über die Türkanten vorstehen, wobei die Breite mindestens eines dieser vorstehenden Stoßabschnitte (24)
   der Gesamtdicke der mit einer zusätzlichen Verblendung
   versehenen Kühlschranktür (15, 27) entspricht.

3. Kühlschrank nach Anspruch 1,
   dadurch gekennzeichnet,
   daß die sich durch den Ausschnitt (4) ergebende Stufe (26) sich innen bis in den nutzbaren Innenraum des Kühlschranks erstreckt und zusammen mit einer in diesem Niveau angeordneten Etagere (8) eine großflächige Ablage bildet.

Fig.1

Fig.2

Fig.3